# EUROPÄISCHE PATENTSCHRIFT

(11) **EP 3 285 957 B1**
(45) Veröffentlichungstag und Bekanntmachung des Hinweises auf die Patenterteilung: **24.07.2019**
(21) Anmeldenummer: 16715519.1
(22) Anmeldetag: 08.04.2016
(51) Int. Cl.: B23K 26/322, B23K 103/04, B23K 26/26, B23K 26/073, B23K 26/082

(54) **VERFAHREN ZUM STIRNSEITIGEN LASERSCHWEISSEN DER STÖSSE VON ZWEI ANEINANDERGRENZEND GEHALTENEN FÜGEFLANSCHEN**
METHOD FOR FRONT SIDE LASER WELDING OF TWO ADJACENT FLANGE JOINTS
PROCÉDÉ DE SOUDAGE LASER DE DEUX JOINTS DE BRIDE ADJACENTES

(30) Priorität: 24.04.2015 DE 102015106339
(43) Veröffentlichungstag der Anmeldung: 28.02.2018
(73) Patentinhaber: Kirchhoff Automotive Deutschland GmbH, 57439 Attendorn (DE)
(72) Erfinder: STUHRMANN, Jan, 57489 Drolshagen (DE)
(74) Vertreter: Haverkamp, Jens
(86) Internationale Anmeldenummer: PCT/EP2016/057760
(87) Internationale Veröffentlichungsnummer: WO 2016/169791

(56) Entgegenhaltungen:
- DE-A1-102012 104 362
- DE-A1-102013 110 523
- DE-B3-102013 107 228

## Beschreibung

Die Erfindung betrifft ein Verfahren zum stirnseitigen Laserschweißen der Stöße von zwei aneinandergrenzend gehaltenen Fügeflanschen zweier Fügepartner aus einem Stahlwerkstoff, bei welchem Verfahren der Schweißlaserstrahl zusätzlich zu der der Längserstreckung der Stöße folgenden Vorschubrichtung quer zur Vorschubrichtung oszillierend hin- und herbewegt wird. Derartige Laserschweißungen können an zahlreichen Fügestellen von Karosseriebauteilen vorgenommen.

Es gibt zahlreiche Anwendungsfälle, in denen mit ihren Flachseiten aneinander gehaltenen Fügeflanschen von Metallbauteilen an ihren Stößen - den parallel zueinander verlaufenden Stirnseiten der Fügeflansche - stirnseitig miteinander verschweißt werden. In vielen Fällen wird man hierfür ein Laserschweißen einsetzen. Die Fügeflansche der Fügepartner können der Längserstreckung der Stöße folgende aneinandergrenzende Endbereiche, beispielsweise von Blechwerkstücken oder eigens zum Ausbilden der Fügeflansche abgekantete oder gebördelte Bereiche eines solchen Werkstückes sein. Um die stirnseitige Verschweißung vornehmen zu können, sind die Fügeflansche in geeigneter Weise aneinander fixiert, etwa mittels einer geeigneten Spanneinrichtung, und zwar solange bis die Schweißung ausgeführt ist.

Aus DE 10 2013 107 228 B3 ist ein stirnseitiges Laserschweißen von Fügeflanschen zweier Fügepartner bekannt, wobei es sich bei den Fügepartnern um Stahlbauteile handelt. Bei dem aus diesem Dokument bekannt gewordenen Laserschweißverfahren ist vorgesehen, einen Zentralbereich der Schweißung mit geringerer Energie und die daran angrenzenden Randbereiche, die sich innerhalb der Stöße befinden, mit einem höheren Energieeintrag zu versorgen. Um über die gewünschte Stoßbreite die Schweißung vornehmen zu können, wird der Schweißlaserstrahl quer zur Vorschubrichtung oszillierend hin- und herbewegt. Bei diesem vorbekannten Verfahren wird diese Schweißlaserstrahlbewegung auch genutzt, um den über den Querschnitt der Schweißung erforderlichen unterschiedlichen Energieeintrag einzubringen, und zwar entweder dadurch, dass in den Randbereichen der Schweißung, in den die Schweißung mit einem höheren Energieeintrag vorgenommen werden soll, die Verweildauer verlängert und/oder die Energie des Laserstrahls erhöht wird. Erreicht wird hiermit, dass die Schweißzone relativ tief in die Stöße eingebracht werden kann.

Durch Überlagerung der Hauptvorschubsrichtung, die der Längserstreckung der zu erstellenden Schweißnaht entspricht, mit einer quer gerichteten Komponente lassen sich Steppschweißnähte ausbilden, wie dieses in DE 10 2012 104 362 A1 beschrieben ist. Mit diesem Verfahren ist es erforderlich, die Fügepartner in einem Bereich der zu erzeugenden Naht vorzuerwärmen. Es schließt sich der Prozess des Einschweißens an, der wiederum von einem Schritt der Nacherwärmung gefolgt wird.

In beiden vorgenannten Dokumenten kann die Oszillationsamplitude an die Geometrie der Fügepartner, beispielsweise deren Dicken, deren Materialien und/oder deren Beschichtungen angepasst werden.

Aus DE 10 2013 110 523 A1 ist eine Vorrichtung und ein Verfahren zum Fügen von Werkstücken mittels eines Laserstrahls bekannt, wobei der Laserstrahl eine erste Oszillationsbewegung mit einer ersten Oszillationsfrequenz und eine derselben überlagerte zweite Oszillationsbewegung mit einer zweiten Oszillationsfrequenz durchführt, wobei die zweite Oszillationsfrequenz größer ist als die erste Oszillationsfrequenz. Erforderlich ist bei diesem Verfahren sowie bei der Vorrichtung eine Niederfrequenz-Umlenkeinheit und eine Hochfrequenz-Umlenkeinheit. Die Oszillationsfrequenz der Niederfrequenz-Umlenkeinheit beträgt maximal 400 Hz und diejenige der Hochfrequenz-Umlenkeinheit mindestens 400 Hz.

Problematisch bei einem Schweißen von Blechbauteilen, vor allem im Fahrzeugkarosseriebereich ist, dass die Blechbauteile mit einer Metallbeschichtung ausgerüstet sind. Hierbei kann es sich um eine korrosionshemmende Beschichtung handeln, beispielsweise eine Zinkbeschichtung. Typischerweise ist eine solche Zinkbeschichtung als Feuerverzinkung oder elektrolytische Verzinkung ausgeführt. Blechbauteile sind zur Reduzierung einer Zunderbildung bei einer vorgesehenen Weiterbearbeitung mittels eines Presshärtverfahrens mitunter auch mit einer AISi-Beschichtung ausgerüstet, wobei eine solche Beschichtung typischerweise durch Schmelztauchen auf das umzuformende Halbzeug aufgebracht wird. Problematisch beim Fügen von Werkstücken, die eine metallische Beschichtung tragen, ist, dass sich die Schmelztemperaturen der Beschichtung signifikant von der Schmelztemperatur des Stahlwerkstoffes unterscheiden. Während der Schmelzpunkt einer für derartige Zwecke vorgesehenen Zinkbeschichtung deutlich unterhalb der Schmelztemperatur (Fügetemperatur) von Stahl liegt, liegt die Schmelztemperatur einer AISi-Beschichtung deutlich höher. Dieses hat zur Konsequenz, dass beim Schweißen von zwei Werkstücken, bei denen zumindest ein Fügepartner eine Zinkbeschichtung aufweist, diese in Folge der zum Schweißen notwendigen Wärme quasi explosionsartig verdampft wird. In einem solchen Fall spricht man von einer Zinkentgasung. Die Folge ist eine verstärkte Spritzerausbildung, womit auch Teile des erschmolzenen Schweißbades weggeführt werden, sowie eine erhöhte Porosität in der Schweißnaht. Insofern genügt eine solche Schweißnaht nicht den an das geschweißte Bauteil ansonsten gestellten Festigkeitsanforderungen, insbesondere wenn es sich um dynamische Beanspruchungen handelt. Im Falle eines Werkstückes mit einer AISi-Beschichtung, mit der zumindest einer der beiden Fügepartner ausgerüstet ist, kann hingegen die Bildung von intermetallischen Phasen beim Schweißen nicht verhindert werden, die sich an der Schmelzlinie sowie an der Schweißnahtwurzel ansammeln. Diese intermetallischen Phasen weisen ein sprödes Materialverhalten auf und sind Ausgangsort für das Versagen bei einer Belastung der geschweißten Fügepartner. Somit genügt auch eine solche Schweißnaht nicht den an das Werkstück gestellten Festigkeitsanforderungen.

Bei einem aus zwei oder mehr Werkstücken durch Fügen zusammengesetzten Bauteil könnte man im Falle einer gewünschten Zinkbeschichtung daran denken, diese erst nach dem Fügen der Fügepartner zu applizieren. Dieses ist aufgrund der unter Umständen komplizierten Geometrie des auf diese Weise erstellten Bauteils, auch wegen seiner Größe, aufwendig und insbesondere sehr viel aufwendiger als das Aufbringen einer Zinkbeschichtung auf einzelne, insbesondere noch nicht umgeformte Werkstücke, also wenn diese noch die Gestalt einer noch ungeformten Platine aufweisen. Zudem kann, sollte das aus den mehreren Werkstücken hergestellte Bauteil Hohlräume aufweisen, eine bestimmungsgemäße Zinkbeschichtung in den Hohlräumen nicht ohne erhebliche zusätzliche Maßnahmen gewährleistet werden. Im Falle einer AISi-Beschichtung kann an eine nachträgliche Beschichtung nicht gedacht werden, da die Werkstücke in aller Regel vor dem Fügen durch Presshärten umgeformt werden, wofür diese Beschichtung benötigt wird.

Zum Herstellen von Bauteilen für den Karosseriebau von Fahrzeugen, welche Bauteile durch Feuchtigkeit- und Salz-Einwirkung gegenüber Korrosion besonders anfällig sind, wäre es wünschenswert, ein Schweißverfahren zum Fügen von mit einer Metallbeschichtung versehenen Werkstücken zur Verfügung zu haben, mit dem diese stirnseitig an ihren Stößen geschweißt werden können, ohne die zum Stand der Technik genannten Nachteile in Kauf nehmen zu müssen. Dieses gilt auch für andere Anwendungen. Der Erfindung liegt daher die Aufgabe zugrunde, ein solches Schweißverfahren vorzuschlagen.

Gelöst wird diese Aufgabe erfindungsgemäß durch ein eingangs genanntes, gattungsgemäßes Verfahren zum stirnseitigen Laserschweißen, bei dem zumindest einer der beiden an den Stößen ihrer Fügeflansche zu schweißenden Fügepartner wenigstens im Bereich seines Fügeflansches mit einer Metallbeschichtung ausgerüstet ist und bei dem das durch den Energieeintrag beim Laserschweißen entstehende Schweißbad zum kontrollierten Ablaufenlassen von Entgasungsprozessen und/oder Verteilungsprozessen von Phasen der durch die Schweißung eingebundenen metallischen Beschichtungen des zumindest einen Fügepartners flüssig gehalten wird, indem die Oszillation des Schweißlaserstrahls mit einer Frequenz zwischen 80 Hz und 1000 Hz erfolgt.

Bei diesem Verfahren zum stirnseitigen Schweißen der Stöße von zumindest zwei aneinander gehaltenen Fügeflanschen wird vermutet, dass durch die hohe Oszillationsfrequenz, welche Laserstrahloszillation zweckmäßigerweise sinusförmig vorgenommen wird, das Schweißbad gegenüber herkömmlichen gattungsgemäßen Schweißverfahren länger flüssig bleibt. Zudem wird durch den hochfrequent oszillierenden Schweißlaserstrahl und den entsprechend hochfrequent oszillierenden Energieeintrag in das Schweißbad eine gewisse Dynamik eingebracht. In Folge dessen werden Entgasungsprozesse metallischer Beschichtungen, die eine geringere Schmelztemperatur aufweisen als diejenigen des zu schweißenden Stahlwerkstoffes begünstigt ablaufen, ohne dass das Schweißbad oder Teile desselben zuvor erhärtet ist. Dieses führt zu porenfreien Schweißnähten. Das längere Flüssighalten des Schweißbades und die darin eingebrachte Dynamik unterstützen dabei Entgasungsprozesse, sodass auch eine Entstehung von Schweißspritzern reduziert ist. Im Falle einer Metallbeschichtung, die bei eingesetzten Schweißtemperaturen noch nicht entgast, wie dieses beispielsweise bei einer AISi-Beschichtung der Fall ist, wird durch die vorbeschriebenen Maßnahmen sichergestellt, dass die sich bildenden intermetallischen Phasen innerhalb des Schweißbades dispers verteilt werden und sich im Unterschied zu vorbekannten Schweißverfahren nicht lokal ansammeln. Sind die intermetallischen Phasen dispers verteilt, beeinträchtigen diese die gewünschten Festigkeitseigenschaften nicht.

Aufgrund der hochfrequenten Oszillation des Schweißlaserstrahls wird das Schweißbad typischerweise über die gesamt Breite der zu erstellenden Schweißnaht flüssig gehalten. Die Vorschubrichtung des Schweißlaserstrahls ist an den Energieeintrag durch den Schweißlaserstrahl angepasst, um das Schweißbad in der vorbeschriebenen Art und Weise auszubilden. Es versteht sich, dass die Vorschubgeschwindigkeit nicht zu hoch sein darf. Aufgrund der hochfrequenten Oszillation des Schweißlaserstrahls kann das Schweißen gemäß diesem Verfahren mit herkömmlichen Vorschubgeschwindigkeiten durchgeführt werden. Das Erzeugen eines Schweißbades, welches sich über die Breite der gewünschten Schweißnaht erstreckt und das Schweißbad zudem länger flüssig gehalten wird, hat zudem den Vorteil, dass die Schweißnaht selbst verglichen mit herkömmlichen Schweißnähten sehr viel homogener ausgebildet ist.

Mit diesem Verfahren wird aufgrund des längeren Flüssighalten des Schmelzbades und der hochfrequenten Oszillation des Laserstrahls quer zur Fügerichtung auch die Nahtanbindungsbreite erhöht. Dieses wiederum wirkt sich positiv auf eine Kompensation von Dickenschwankungen in den Stößen der zu fügenden Werkstücke aus. Überdies ist durch diese Maßnahmen gewährleistet, dass die eingestellte Schweißtiefe auch die tatsächliche Anbindungstiefe der Fügepartner widerspiegelt.

Um zu verhindern, dass Teile des Schweißbades unkontrolliert abfließen, ist bei einer bevorzugten Ausführung dieses Verfahrens vorgesehen, dass von den zu fügenden Stößen der Fügeflansche ein jeweils von dem anderen Fügeflansch wegweisender Randbereich zumindest im Bereich der Schweißnahtwurzel nicht aufgeschmolzen wird. Diese Randbereiche der Stöße bilden sodann Schweißbadbegrenzungswände aus. Denkbar ist es aber auch, dass der obere Abschluss der Fügeflansche komplett aufgeschmolzen sein kann.

Das stirnseitige Laserschweißen in der beschriebenen Art und Weise macht sich auch den Umstand zunutze, dass die Stöße ein Materialreservoir zum Ausbilden der Schmelze bilden, ohne befürchten zu müssen, dass durch den Energieeintrag in einen der Fügepartner ein Loch eingebrannt wird. Daher eignet sich dieses Verfahren vor allem auch zum Schweißen von Werkstücken aus hochfesten Stählen, die zur Gewichtsreduzierung des daraus zu erstellenden Bauteils selbst nur eine geringe Wandstärke aufweisen. Aufgrund der kontrollierten Entgasung im Falle der Verwendung zumindest eines Fügepartners mit einer metallischen Beschichtung, deren Schmelztemperatur unterhalb der Stahlschmelztemperatur liegt, kann die Höhe der Fügeflansche, also die Schweißbadmaterialvorgabe geringer gewählt werden, verglichen mit der notwendigen Höhe der Fügeflansche bei vorbekannten stirnseitigen Laserschweißverfahren, da eine sich in diese Richtung erstreckende Sicherheitszone, aus der aufgrund der Entgasung der Beschichtung auch Anteile des Stahlwerkstoffes mit weggerissen werden könnten, nicht vorgehalten werden muss. Insofern kann bei entsprechender Auslegung der zu fügenden Werkstücke die Höhe der Fügeflansche so bemessen werden, dass diese quasi vollständig zur Ausbildung des Schweißbades genutzt werden, mithin die Fügeflansche, wenn diese von der eigentlichen Erstreckung des Werkstückes abgekantet oder umgebördelt sind, nur noch in Höhe der Schweißnaht von der übrigen Oberfläche des aus den Werkstücken hergestellten Bauteils hervorstehen.

Mit steigender Oszillationsfrequenz wird zunehmend mehr dynamische Energie in das Schweißbad eingebracht, was die vorbeschriebenen Prozesse während des Schweißens innerhalb des Schweißbades begünstigt. Daher wird bevorzugt das Verfahren mit einer Oszillationsfrequenz von mehr als 100 Hz durchzuführen. Eine Frequenz von mehr als 900 Hz bis 1000 Hz wird als nicht erforderlich angesehen, da bei diesen Frequenzen keine weitere unterstützende Beeinflussung in dem vorbeschriebenen Sinne zu erwarten ist. Eine Schweißlaserstrahloszillation von 250 bis 450 Hz wird als besonders vorteilhaft angesehen, auch mit Blick auf die notwendige Mechanik zum entsprechenden Lenken des Laserstrahls.

Die Oszillationsbewegung des Laserstrahls erfolgt vorzugsweise durch ein entsprechend oszillierendes lichtlenkendes Element, beispielsweise ein Spiegel oder ein Prisma, durch welches lichtlenkende Element der Schweißlaserstrahl auf die miteinander zu verschweißenden Stöße der Fügeflansche zweier oder auch mehrerer Fügepartner gelenkt wird. Die Oszillationsbewegung des Schweißlaserstrahls wird gemäß einer bevorzugten Ausgestaltung durch entsprechendes oszillierendes Schwenken eines solchen lichtlenkenden Körpers bereitgestellt. Dieses ermöglicht auch eine besonders einfache Einstellung des Oszillationsbetrages. Es versteht sich, dass der Betrag der Oszillation des Laserstrahls auf den miteinander zu fügenden Stößen eingerichtet werden kann, und zwar durch eine entsprechende Einstellung des Abstandes der zu fügenden Oberfläche der Stöße in Richtung oder entgegen der Richtung des Schweißlaserstrahls.

Um eine Entgasung einer metallischen Beschichtung eines oder auch beider Fügepartner weiter zu begünstigen, ist in einem bevorzugten Ausführungsbeispiel vorgesehen, eine Erwärmung der Stoßoberflächen zur Ausbildung des Schweißbades graduell vorzunehmen. Dieses erfolgt durch Vorerwärmen der zu fügenden Stöße der Fügeflansche, und zwar dergestalt, dass die Beschichtung durch die Vorerwärmung auf ihre Verdampfungstemperatur oder etwas darüber gebracht wird, bevor die eigentliche Schweißenergie in die Fügepartner eingebracht wird, die sodann zum Aufschmelzen des Stahlwerkstoffes führt. Eine Entgasung der metallischen Beschichtung erfolgt bei einer Durchführung des Schweißverfahrens mit einer solchen Vorerwärmung sodann zumindest maßgeblich bereits vor dem tatsächlichen Aufschmelzen des Stahlwerkstoffes. Vorzugsweise ist der Entgasungsprozess somit vor dem sehr viel höheren notwendigen Energieeintrag zum Ausbilden des Schweißbades zumindest weitesgehend abgeschlossen. Eine solche Vorerwärmung kann beispielsweise durch Auskoppeln eines Teils des Schweißlaserstrahls und Aufbringen des ausgekoppelten Teilstrahls auf die zu fügenden Stöße, dem eigentlichen Schweißlaserstrahl voreilend vorgenommen werden. Zum Auskoppeln eines solchen einer Vorerwärmung dienenden Teillaserstrahls können optische lichtlenkende Elemente eingesetzt werden. Derartige lichtlenkende Elemente bzw. Körper sind hinlänglich bekannt. Es versteht sich, dass durch die Vorerwärmung der oder die beschichteten Fügeflansche nur oberflächlich auf die Entgasungstemperatur der metallischen Beschichtung gebracht werden müssen. Untersuchungen haben gezeigt, dass eine Vorerwärmung der zu fügenden Stöße der Fügeflansche bereits dann den Entgasungsprozess unterstützt, wenn die mit einer metallischen Beschichtung versehene Oberfläche nicht bis auf ihre Entgasungstemperatur erwärmt wird, auch wenn dieses bevorzugt sein dürfte. Bereits ein solches Vorerwärmen führt dazu, dass in Folge des graduellen Erwärmens der Metallbeschichtung diese beim Einbringen der zum Schweißen notwendigen Energie nicht zu plötzlich erwärmt wird.

Eine Vorerwärmung kann auch ohne Auskoppeln eines Teillaserstrahls aus dem Schweißlaserstrahl, wie vorbeschrieben, vorgenommen werden, und zwar dadurch, dass der Schweißlaserstrahl gegenüber der Lotrechten zur Stirnseite der Stöße in Vorschubrichtung geneigt ist, beispielsweise zwischen 5 und 45 Grad, wobei eine diesbezügliche Neigung vorzugsweise mehr als 20 Grad beträgt. Aufgrund dieser Neigung schiebt der Schweißlaserstrahl eine Wärmefront vor sich her. Untersuchungen haben gezeigt, dass mit derartigen Schweißparametern eine effektive Vorerwärmung zur kontrollierten Entgasung bei beschichteten Fügepartnern stattfindet.

Das Ausmaß von Entgasungsprozessen metallischer Beschichtungen beim Fügen ist abhängig von der Beschichtungsdicke. Mit dem beschriebenen Schweißverfahren und aufgrund der damit einhergehenden Schweißparameter wurden exzellente Schweißergebnisse erzielt, selbst mit Zinkbeschichtungen, die dem derzeitig maximal Üblichen von 140 g/m² entsprechen. Nachfolgend ist die Erfindung anhand der beiliegenden Figuren näher beschrieben. Es zeigen:
- **Fig. 1:**: eine schematisierte Darstellung zum stirnseitigen Laserschweißen der Stöße von zwei aneinandergrenzend gehaltenen Fügeflanschen zweier Fügepartner,
- **Fig. 1a:**: eine um 90 Grad gedrehte Teilseitenansicht auf den in Figur 1 rechten Fügepartner,
- **Fig. 2:**: ein Gefügebild durch eine stirnseitige Schweißnaht hergestellt mit dem erfindungsgemäßen Verfahren,
- **Fig. 3:**: ein Gefügebild eines Ausschnittes aus der in Figur 2 gezeigten Schweißnaht und
- **Fig. 4:**: ein Gefügebild einer mit einem herkömmlichen stirnseitigen Laserschweißverfahren hergestellten Schweißnaht.

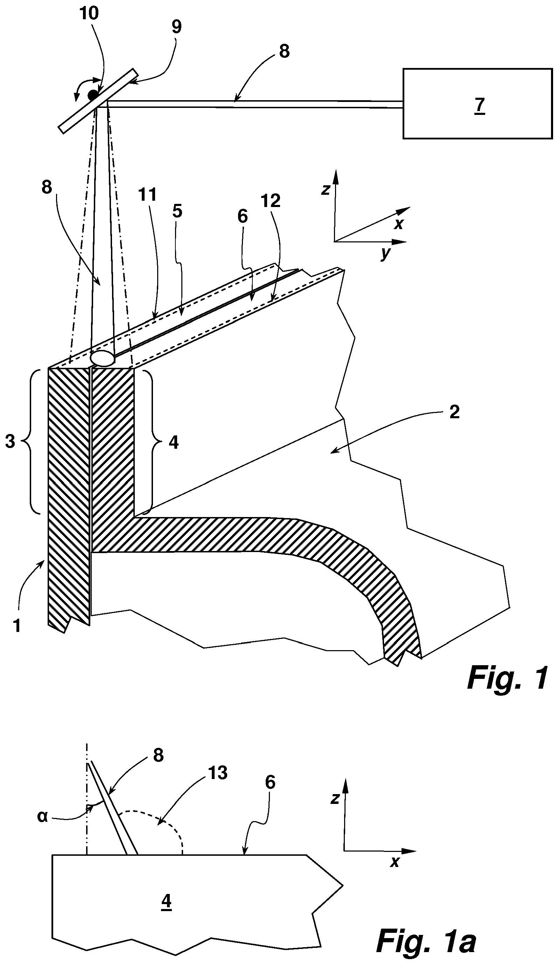

Figur 1 zeigt zwei Stahlwerkstücke 1, 2 als Fügepartner. Die Werkstücke 1, 2 weisen jeweils einen Fügeflansch 3, 4 auf. Die Fügeflansche 3, 4 bilden mit ihrem in Figur 1 gezeigten oberen Abschluss jeweils einen Stoß 5, 6 aus. Bei dem Werkstück 1 handelt es sich bei dem Fügeflansch 3 um einen Randbereich des als Blechplatte konzipierten Werkstückes. Bei dem Werkstück 2 ist der Fügeflansch 4 durch einen Abkantvorgang bereitgestellt. Beide Werkstücke 1, 2 sind aus einer hochfesten Stahllegierung hergestellt. Das Werkstück 2 ist in seine in Figur 1 gezeigte Form durch einen Presshärtschritt gebracht worden. Das Werkstück 2 trägt zur Optimierung des vorangegangenen Presshärtvorganges eine AISi-Beschichtung. Das Werkstück 1 weist bei dem in den Figuren dargestellten Ausführungsbeispiel eine Zink-Beschichtung auf, und zwar mit einer Auflage von 140 g/m².

Die beiden Werkstücke1, 2 sollen durch eine stirnseitig auf die Stöße 5, 6 ausgeführte Schweißung miteinander verbunden werden. Zu diesem Zweck werden die Fügeflansche 3, 4 entsprechend zueinander gehalten, wie in Figur 1 dargestellt, und zwar mittels einer in den Figuren nicht dargestellten Halte- bzw. Spannvorrichtung. Die auszubildende Schweißnaht folgt der Längserstreckung der Stöße 5, 6. In Figur 1 ist diese Richtung als x-Richtung angegeben. Somit werden die Fügeflansche 3, 4 zum Zwecke des Schweißvorganges mit ihrer zueinander weisenden Flachseiten aneinander gehalten.

Verschweißt werden die Stöße 5, 6 mittels eines Lasers 7, dessen Schweißlaserstrahl 8 über einen Spiegel 9 als lichtlenkendes Element auf die Stöße 5, 6 der Fügeflansche 3, 4 aufgebracht wird. Der Spiegel 9 ist schwenkbar um eine Schwenkachse 10 gelagert. Mittels des Spiegels 9 kann der Schweißlaserstrahl 8 quer zur Vorschubrichtung (*x*-Richtung) verstellt werden. Dieses ist erforderlich, um eine hinreichende Breite der Stöße 5, 6 in die Schweißbadausbildung einbeziehen zu können. Somit dient der Spiegel 9 zum oszillierenden Hin- und Herbewegen des Schweißlaserstrahls 8 in *y-*Richtung. Bei dem dargestellten Ausführungsbeispiel ist der Schwenkbetrag des Spiegels 9 vorgegeben. Durch Einrichten des Abstandes der Stöße 5, 6 und somit der Werkstücke 1, 2 von dem Spiegel 9 kann sodann der von dem hin- und herbewegten Schweißlaserstrahl 8 abgedeckte Oberflächenbereich der Stöße 5, 6 festgelegt werden. Es versteht sich, dass je größer der Abstand der Stöße 5, 6 von dem Spiegel 9 ist, der von dem Schweißlaserstrahl 8 abgedeckte Bereich größer ist.

Über den Schweißlaserstrahl 8 wird hinreichend Energie in die Fügeflansche 3, 4 eingebracht, damit der Stahlwerkstoff zur Ausbildung eines Schmelzbades erschmolzen werden kann.

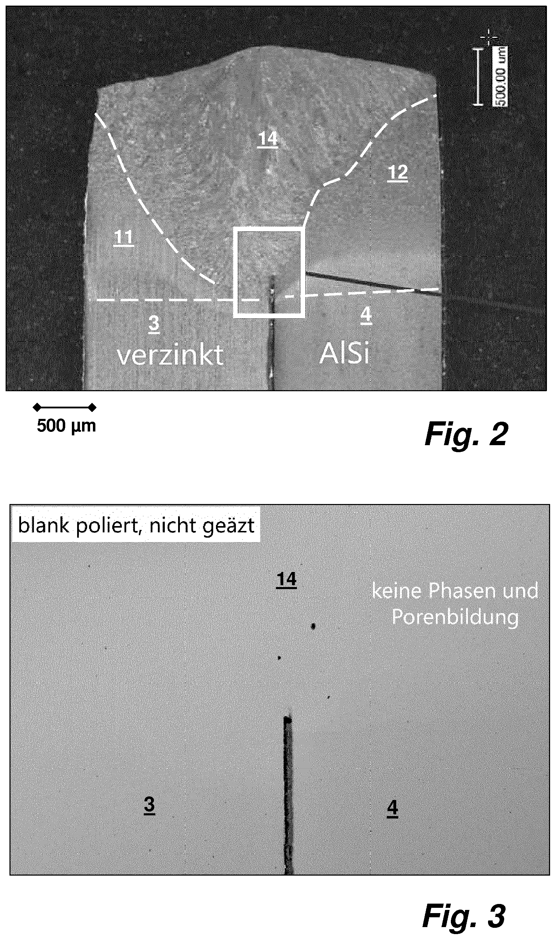

Bei dem dargestellten Ausführungsbeispiel wird das Laserschweißen mit defokussiertem Laserspotdurchmesser durchgeführt. Die Defokussierung des Schweißlaserstrahls 8 und den Betrag der Laserstrahlbewegung in *y-*Richtung wird man aneinander anpassen. Bei dem beschriebenen Schweißverfahren wird der Laserstrahl 8 in *y*-Richtung mit etwa 300 Hz oszillierend hin-und herbewegt. Entsprechend muss der Spiegel 9 oszillierend verschwenkt werden. Die Defokussierung erfolgt dabei, um einen möglichst breiten Bereich der Stöße 5, 6 abzudecken und um den Energieeintrag an dieser Stelle hinsichtlich der Eintragstiefe des beschichteten Systems zu optimieren. Demnach wird durch die Defokussierung bei gleicher Leistung eine größere Fläche mit geringerer Leistungsdichte bearbeitet. Mit anderen Worten werden die Fügepartner und die Beschichtungen langsamer und gleichmäßiger aufgeschmolzen, wodurch die Schweißverbindung besser ausgebildet ist und auch weniger Materialspritzer auftreten. Bei dem dargestellten Ausführungsbeispiel ist der Schweißlaserstrahl 8 defokussiert, und zwar derart, dass sein Strahldurchmesser beim Auftreffen auf die Oberfläche der Stöße 5, 6 etwa der minimalen Blechdicke eines Fügepartners entspricht. Ferner ist bei dem Schweißvorgang vorgesehen, dass die Fügeflansche 3, 4 nicht vollständig zur Ausbildung des Schmelzbades erschmolzen werden, sondern dass jeweils ein von dem jeweiligen anderen Fügeflansch wegweisender Randabschnitt zumindest im Bereich der Schweißnahtwurzel stehen bleibt oder nur zu einem geringeren Anteil in die Schweißbadausbildung einbezogen wird. In Figur 1 und 2 sind diese Randbereiche mit den Bezugszeichen 11, 12 kenntlich gemacht. Diese erstrecken sich parallel zur Vorschubrichtung (x-Richtung). Diese Randabschnitte bilden Schweißbadbegrenzungswände, wenn die übrigen Bestandteile der Fügeflansche 3, 4 zur Ausbildung eines Schweißbades erschmolzen sind. Durch diese verbleibenden Schweißbadbegrenzungswände ist die Schmelze zumindest im Bereich der Schweißnahtwurzel gehindert, seitlich abzufließen.

Bei der dargestellten Schweißanordnung ist der Schweißlaserstrahl 8, wie in Figur 1a gezeigt, nicht lotrecht auf die Stöße 5, 6 gerichtet, sondern in Vorschubrichtung (*x*-Richtung) geneigt. Die Vorschubrichtung des Schweißlaserstrahls 8 ist in Figur 1 nach rechts gerichtet. Der Neigungswinkel α zwischen der Lotrechten und dem Schweißlaserstrahl 8 beträgt bei der dargestellten Schweißanordnung etwa 35 Grad. Erreicht wird hiermit, dass sich in Vorschubrichtung eine Wärmefront 13 ausbildet, die dem Auftreffen des eigentlichen Schweißlaserstrahls 8 auf die Stöße 5, 6 voreilt. Bewirkt wird hiermit eine Vorerwärmung der Stöße 5, 6 bzw. der Fügeflansche 3, 4. Die Vorerwärmung dient dem Zwecke, die Zinkbeschichtung des Fügeflansches 3 vorzuerwärmen, vorzugsweise bis auf seine Entgasungstemperatur, bevor der Schweißlaserstrahl 8 den darunter befindlichen Stahlwerkstoff erschmilzt. Dieses unterstützt eine kontrollierte Zinkentgasung, die letztendlich nicht vermeidbar ist.

Während des Schweißvorganges oszilliert der Schweißlaserstrahl 8 in *y-*Richtung und somit quer zur Vorschubrichtung mit etwa 300Hz. Dieses bewirkt ein Aufschmelzen der außerhalb der Randbereiche 11, 12 liegenden Fügeflanschbereiche, die sodann das Schweißbad bilden. Diese hochfrequente Oszillation des Schweißlaserstrahls 8 bewirkt, dass das Schweißbad über die gesamte Breite der Schweißung flüssig ist und über einen gewissen Zeitraum flüssig bleibt. Zudem wird durch den oszillierenden Energieeintrag eine gewisse Dynamik in das Schweißbad eingekoppelt, welche nicht nur den Zinkentgasungsprozess unterstützt, sondern auch Sorge dafür trägt, dass die bei dem Schweißen aufgrund der AISi-Beschichtung des Fügeflansches 4 entstehenden AlSi-Phasen in dem Schweißbad und in der daraus erstarrten Schweißnaht dispers verteilt sind. Die Bewegung des Schweißlaserstrahls 8 in Vorschubrichtung ist angepasst, damit das Schweißbad hinreichend lange flüssig bleibt.

Eine Schweißbaddynamik kann ergänzend auch durch Ankoppeln eines Ultraschallkopfes an einen der beiden Fügepartner in das Schweißbad eingekoppelt werden. Grundsätzlich ist es jedoch ausreichend, dass durch die hochfrequente Oszillation des Schweißlaserstrahls in *y*-Richtung eine gewisse Dynamik in das Schweißbad eingebracht wird.

Wenn im Zusammenhang mit der Oszillationsbewegungsrichtung des Schweißlaserstrahls 8 vorstehend in *y*-Richtung die Rede war, versteht es sich, dass der Schweißlaserstrahl nicht streng genommen quer und somit mit 90 Grad zur Vorschubrichtung (*x*-Richtung) oszillieren muss, um die Vorteile dieses Schweißverfahrens zu erhalten. Unter dem im Rahmen dieser Ausführung benutzten Begriff "quer zur Vorschubrichtung" ist jede Oszillationsrichtung des Schweißlaserstrahls zu verstehen, die winklig zur Vorschubrichtung verläuft, insbesondere mehr als 45 Grad zu dieser verläuft.

Eine Mikrogefügeaufnahme der auf vorbeschriebene Art und Weise ausgebildeten Schweißnaht ist in Figur 2 gezeigt. Die Fotografie zeigt eindrucksvoll die sehr homogene kristallographische Ausbildung der Schweißnaht, durch die die beiden Fügeflansche 3, 4 miteinander verbunden sind. Die Schweißnaht ist in dieser Fotografie mit dem Bezugszeichen 14 kenntlich gemacht. Intermetallische Phasen sind nicht erkennbar,. Rastermikroskopische Untersuchungen haben gezeigt, dass die auf dem AISi beschichteten Fügeflansch 4 vorhandenen intermetallischen Phasen dispers in der Schweißnaht 14 verteilt sind. Figur 3 zeigt den in Figur 2 mit einem weißfarbenen Kästchen eingefassten Bereich der Schweißnaht 14 blank poliert und nicht geätzt. Intermetallischen Phasen oder Poren sind nicht erkennbar.

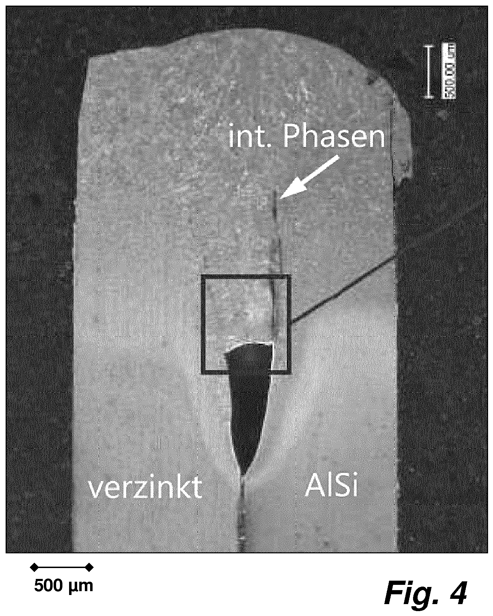

Figur 4 zeigt im Vergleich eine Aufnahme einer Schweißnaht entsprechend derjenigen der Figur 2, jedoch hergestellt mit einem herkömmlichen stirnseitigen Laserschweißen. Die Unterschiede in der Ausbildung der Schweißnaht sind signifikant. Bei der Schweißung gemäß der Figur 4 sind Teile der Fügeflansche durch die unkontrollierte Zinkentgasung mit weggeführt worden. Dieses ist der Grund für die Ausbildung des Hohlraumes unterhalb der Schweißnaht. Ausgehend von der Wurzel der Schweißnaht ist zudem im Bereich der Schmelzgrenze des AlSi-beschichteten Fügeflansches eine in dem Schnitt sich linienförmig darstellende Ansammlung intermetallischer Phasen erkennbar. Sowohl die unkontrollierte Zinkentgasung, als auch die Ansammlung der intermetallischen Phasen, die im Unterschied zum Gegenstand des erfindungsgemäßen Verfahrens erkennbar nicht dispers in der Schmelze verteilt sind, führt dazu, dass derartige Schweißnähte den an eine solche Schweißnaht gestellten Festigkeitsanforderungen nicht genügen.

Das vorbeschriebene Schweißverfahren eignet sich für eine Vielzahl von Anwendungen. Im Automotivebereich können durch dieses Verfahren metallisch beschichtete Fügepartner kostengünstig gefügt werden, beispielsweise zum Ausbilden von Stoßfängerquerträgern, bei denen pressgehärtete Querträger mit verzinkten Schließblechen versehen werden oder wenn verzinkte Motor- oder Getriebeträger verschweißt werden sollen oder beispielsweise pressgehärtete B-Säulen mit verzinkten Schließblechen zu fügen sind oder verzinkte Fahrwerksteile mit anderen Teilen - mit oder ohne Zinkbeschichtung oder mit oder ohne AISi-Beschichtung - geschweißt werden sollen.

### Bezugszeichenliste

- 1: Werkstück
- 2: Werkstück
- 3: Fügeflansch
- 4: Fügeflansch
- 5: Stoß
- 6: Stoß
- 7: Laser
- 8: Schweißlaserstrahl
- 9: Spiegel
- 10: Schwenkachse
- 11: Randbereich
- 12: Randbereich
- 13: Wärmefront
- 14: Schweißnaht
- α: Neigungswinkel

## Patentansprüche

1. Verfahren zum stirnseitigen Laserschweißen der Stöße (5, 6) von zwei aneinandergrenzend gehaltenen Fügeflanschen (3, 4) zweier Fügepartner (1, 2) aus einem Stahlwerkstoff, bei welchem Verfahren der Schweißlaserstrahl (8) zusätzlich zu der der Längserstreckung der Stöße (5, 6) folgenden Vorschubrichtung quer zur Vorschubrichtung oszillierend hin- und herbewegt wird, **dadurch gekennzeichnet, dass** zumindest einer der beiden an den Stößen (5, 6) ihrer Fügeflansche (3, 4) zu schweißenden Fügepartner (1, 2) wenigstens im Bereich seines Fügeflansches (3, 4) mit einer Metallbeschichtung ausgerüstet ist und dass das durch den Energieeintrag beim Laserschweißen entstehende Schweißbad zum kontrollierten Ablaufenlassen von Entgasungsprozessen und/oder Verteilungsprozessen von Phasen der durch die Schweißung eingebundenen metallischen Beschichtungen des zumindest einen Fügepartners (1, 2) flüssig gehalten wird, indem die Oszillation des Schweißlaserstrahls (8) mit einer Frequenz zwischen 80 Hz und 1000 Hz erfolgt.

2. Verfahren nach Anspruch 1, **dadurch gekennzeichnet, dass** der Schweißlaserstrahl (8) mit mehr als 100 Hz, insbesondere mehr als 250 Hz oszilliert.

3. Verfahren nach einem der Ansprüche 1 oder 2, **dadurch gekennzeichnet, dass** durch den Schweißvorgang ein jeweils von dem anderen Fügeflansch (3, 4) wegweisender Randbereich (11, 12) der Stöße (5, 6) der Fügeflansche (3, 4) durch den Schweißvorgang zumindest im Bereich einer Schweißnahtwurzel nicht aufgeschmolzen wird, damit diese als Schweißbadbegrenzungswände stehen bleiben.

4. Verfahren nach einem der Ansprüche 1 bis 3, **dadurch gekennzeichnet, dass** die zum Aufschmelzen vorgesehenen Bereiche der Stöße (5, 6) vor dem zum Aufschmelzen notwendigen Energieeintrag graduell vorerwärmt werden.

5. Verfahren nach Anspruch 4, **dadurch gekennzeichnet, dass** der Schweißlaserstrahl (8) gegenüber der Lotrechten zur Stirnseite der Stöße (5, 6) in Vorschubrichtung geneigt geführt wird.

6. Verfahren nach Anspruch 4, **dadurch gekennzeichnet, dass** der Neigungswinkel des Schweißlaserstrahls (8) gegenüber der Lotrechten zur Stirnseite der Stöße (5, 6) zwischen 5 Grad und 45 Grad liegt.

7. Verfahren nach Anspruch 4, **dadurch gekennzeichnet, dass** mittels eines optischen Systems zur Vorerwärmung ein Teil aus dem Schweißlaserstrahl ausgekoppelt und dieser ausgekoppelte Vorwärmlaserstrahl dem Schweißlaserstrahl voreilend geführt wird.

8. Verfahren nach einem der Ansprüche 1 bis 7, **dadurch gekennzeichnet, dass** die metallische Beschichtung des einen Fügepartners (1) eine insbesondere als Feuerverzinkung oder elektrolytische Verzinkung ausgeführte Zinkbeschichtung ist.

9. Verfahren nach Anspruch 8, **dadurch gekennzeichnet, dass** die Zinkbeschichtung mit zumindest 100 g/m² ausgeführt ist.

10. Verfahren nach einem der Ansprüche 1 bis 7, **dadurch gekennzeichnet, dass** die metallische Beschichtung des einen Fügepartners (2) eine AISi-Beschichtung ist.

11. Verfahren nach einem der Ansprüche 1 bis 10, **dadurch gekennzeichnet, dass** beide Fügepartner (1, 2) mit einer gleichen oder auch einer unterschiedlichen metallischen Beschichtung ausgeführt sind.

## Claims

1. A method for laser welding the end faces of the joints (5, 6) of two connecting flanges (3, 4), which are held in an adjoining manner, of two connecting partners (1, 2) made of a steel material, in which method, in addition to being moved in the advancement direction, which follows the longitudinal expanse of the joints (5, 6), the laser welding beam (8) is moved back and forth in an oscillating manner transversely to the advancement direction, **characterized in that** at least one of the two connecting partners (1, 2) to be welded at the joints (5, 6) of their connecting flanges (3, 4) is provided with a metal coating, at least in the region of its connecting flange (3, 4), and in which the weld pool that occurs due to the introduction of energy during laser welding is kept liquid for controlled occurrence of degassing processes and/or distribution processes of phases of the metallic coatings of the at least one connecting partner (1, 2), which phases are involved because of the welding, **in that** the oscillation of the laser welding beam (8) takes place at a frequency between 80 Hz and 1000 Hz.

2. The method according to claim 1, **characterized in that** the laser welding beam (8) oscillates at more than 100 Hz, particularly more than 250 Hz.

3. The method according to one of claims 1 or 2, **characterized in that** an edge region (11, 12) of the joints (5, 6) of the connecting flanges (3, 4), which region faces away from the other connecting flange (3, 4), in each instance, is not melted by means of the welding process, at least in the region of the weld seam root, so that these edge regions remain standing as weld pool delimitation walls.

4. The method according to one of claims 1 to 3, **characterized in that** the regions of the joints (5, 6) intended for being melted are gradually preheated before introduction of the energy required for melting.

5. The method according to claim 4, **characterized in that** the laser welding beam (8) is guided to be inclined in the advancement direction, relative to the vertical to the end face of the joints (5, 6).

6. The method according to claim 4, **characterized in that** the angle of inclination of the laser weld beam (8) lies between 5 degrees and 45 degrees relative to the vertical to the end face of the joints (5, 6).

7. The method according to claim 4, **characterized in that** part of the laser weld beam is uncoupled for preheating, by means of an optical system, and this uncoupled preheating laser beam is guided to move ahead of the welding laser beam.

8. The method according to one of claims 1 to 7, **characterized in that** the metallic coating of the one connecting partner (1) is, in particular, a zinc coating carried out using hot dipping or electrolytic zinc plating.

9. The method according to claim 8, **characterized in that** the zinc coating is carried out with at least 100 g/m².

10. The method according to one of claims 1 to 7, **characterized in that** the metallic coating of the one connecting partner (2) is an AISi coating.

11. The method according to one of claims 1 to 10, **characterized in that** the two connecting partners (1, 2) are configured to have the same or also a different metallic coating.

## Revendications

1. Procédé de soudage laser frontal des joints (5, 6) de deux brides à jointer (3, 4), maintenues de manière adjacente, de deux éléments à jointer (1, 2) en acier, lors duquel procédé le rayon laser de soudage (8) est de surcroît déplacé selon un mouvement oscillant en allant et venant, perpendiculairement au sens d'avancée, lequel sens d'avancée suit l'étendue longitudinale des joints (5, 6), **caractérisé en ce que** au moins un des deux éléments à jointer (1, 2) par soudure sur les joints (5, 6) de leur brides à jointer (3, 4) est muni, au minimum au niveau de sa bride à jointer (3, 4), d'un revêtement métallique et **en ce que** le bain de fusion, lequel est généré par l'apport d'énergie lors du soudage laser afin de permettre un écoulement contrôlé des processus de dégazage et/ou des processus de répartition des phases des revêtements métalliques liés par soudage de l'au moins un élément à jointer (1, 2), est maintenu à l'état liquide en effectuant une oscillation du rayon laser de soudage (8) à une fréquence située entre 80 Hz et 1000 Hz.

2. Procédé selon la revendication 1, **caractérisé en ce que** le rayon laser de soudage (8) oscille à plus de 100 Hz et plus particulièrement à plus de 250 Hz.

3. Procédé selon l'une des revendications 1 ou 2, **caractérisé en ce que,** lors du processus de soudage, une zone périphérique (11, 12) des joints (5, 6) des brides à jointer (3, 4) orientée à l'opposé de l'autre bride à jointer (3, 4) n'est pas mise en fusion par le processus de soudage sur au moins une zone de racine de soudure, afin que celle-ci reste en place pour faire office de paroi de délimitation du bain de fusion.

4. Procédé selon l'une des revendications 1 à 3, **caractérisé en ce que** les zones des joints (5, 6) prévues pour être mises en fusion sont préchauffées graduellement avant de procéder à l'apport d'énergie nécessaire à la mise en fusion.

5. Procédé selon la revendication 4, **caractérisé en ce que** le rayon laser de soudage (8) est guidé dans le sens d'avancée avec une inclinaison par rapport à l'aplomb de la face frontale des joints (5, 6).

6. Procédé selon la revendication 4, **caractérisé en ce que** l'angle d'inclinaison du rayon laser de soudage (7) se situe entre 5 degrés et 45 degrés par rapport à l'aplomb de la face frontale des joints (5, 6).

7. Procédé selon la revendication 4, **caractérisé en ce qu'**une partie du rayon laser de soudage est découplée au moyen d'un système optique à des fins de préchauffage et que ce rayon laser de préchauffage découplé est guidé de manière à précéder le rayon laser de soudage.

8. Procédé selon l'une des revendications 1 à 7, **caractérisé en ce que** le revêtement métallique de l'un des éléments à jointer (1) est un revêtement galvanisé notamment conformé sous forme de galvanisation à chaud ou galvanisation électrolytique.

9. Procédé selon la revendication 8, **caractérisé en ce que** le revêtement galvanisé est réalisé avec au moins 100 g/m²

10. Procédé selon l'une des revendications 1 à 7, **caractérisé en ce que** le revêtement métallique de l'un des éléments à jointer (2) est un revêtement AlSi.

11. Procédé selon l'une des revendications 1 à 10, **caractérisé en ce que** les deux éléments à jointer (1, 2) sont réalisés avec un revêtement métallique identique ou différent.
